# EUROPÄISCHE PATENTSCHRIFT

(11) **EP 0 576 459 B1**
(45) Veröffentlichungstag und Bekanntmachung des Hinweises auf die Patenterteilung: **29.12.1997**
(21) Anmeldenummer: 92905919.4
(22) Anmeldetag: 28.02.1992
(51) Int. Cl.: H04L 12/40

(54) **VERFAHREN ZUM AUFBAU VON BOTSCHAFTEN FÜR DEN DATENAUSTAUSCH UND/ODER FÜR DIE SYNCHRONISATION VON PROZESSEN IN DATENVERARBEITUNGSANLAGEN**
METHOD OF COMPOSING MESSAGES FOR DATA-EXCHANGE PURPOSES AND/OR FOR THE SYNCHRONIZATION OF PROCESSES IN DATA-EXCHANGE SYSTEMS
PROCEDE DE CONSTITUTION DE MESSAGES POUR L'ECHANGE DE DONNEES ET/OU POUR LA SYNCHRONISATION DE PROCESSUS DANS DES INSTALLATIONS DE TRAITEMENT DE DONNEES

(30) Priorität: 28.03.1991 DE 4110428; 03.09.1991 DE 4129205
(43) Veröffentlichungstag der Anmeldung: 05.01.1994
(73) Patentinhaber: ROBERT BOSCH GMBH, 70442 Stuttgart (DE)
(72) Erfinder: DAIS, Siegfried, D-7016 Gerlingen (DE); UNRUH, Jan, D-7000 Stuttgart 61 (DE)
(86) Internationale Anmeldenummer: DE9200164
(87) Internationale Veröffentlichungsnummer: WO9217962

(56) Entgegenhaltungen:
- EP-A- 0 237 839
- EP-A- 0 399 491
- DE-A- 4 029 290
- FR-A- 2 574 236

## Beschreibung

Die Erfindung geht aus von einem Verfahren zum Aufbau von Botschaften für den Datenaustausch und/oder für die Synchronisation von Prozessen in Datenverarbeitungsanlagen nach der Gattung des Hauptanspruchs.

In den letzten Jahren wurde in Prozeßsteuerungen - insbesondere in Kraftfahrzeugen, in Robotern, in medizinischen Überwachungs- und Analysegeräten, in Aufzugsystemen, usw. - der Datenaustausch zwischen den einzelnen Steuer- und Regeleinheiten zunehmend mit Hilfe eines Verfahrens zum seriellen Datenaustausch abgewickelt.

In der Praxis bildeten sich bzgl. der Prioritätssteuerung für die Vergabe des die Steuer- und Regeleinheiten verbindenden seriellen Busses und/oder der Kennzeichnung der über den seriellen Bus zu übertragenden Botschaften insbesondere zwei Klassen von Protokollen heraus:
1. Solche mit kurzen Identifizierern,
   d.h. die nur über eine geringe Anzahl, z.B. 11, von Bits zur Kodierung unterschiedlicher Prioritäten und/oder Namen verfügen. Ein solches Protokoll ist aus dem Patent DE-C-3506118 und dem ISO-Dokument ISO/TC22/SC3/VG1 N422E bekannt (CAN Protokoll).
2. Solche mit langen Identifizierern,
   d.h. die über eine größere Anzahl von Bits, z. B. 32, zur Kodierung unterschiedlicher Prioritäten und/oder Namen verfügen. Ein solches Protokoll ist aus der Veröffentlichung FORD 'Standard Corporate Specification', Version 1.0, April 1989, ISO/TC22/SC3/VG1 N378E, bekannt.

Nachdem kein Protokoll bekannt ist, daß beide Möglichkeiten in sich vereint, hat sich der Anvender nach dem gegenwärtigen Stand der Technik für ein Protokoll der einen oder anderen Klasse zu entscheiden.

Protokolle der ersten Klasse zeichnen sich dadurch aus, daß aufgrund des kurzen Identifizierers auch die Gesamtlänge der zugehörigen Botschaft in Bezug auf die Anzahl erforderlicher Bits kurz sein kann. Dies gestattet, bei gegebener Bitrate eine große Anzahl von Botschaften pro Zeiteinheit zu übertragen. Dieser dadurch bedingten hohen Übertragungseffizienz steht als Nachteil eine entsprechend eingeschränkte Vielfalt hinsichtlich der Vergabemöglichkeit von Prioritäten für die Zuteilung des seriellen Busses und/oder von Namen zur Kennzeichnung der zu übertragenden Botschaften gegenüber.

Protokolle der zweiten Klasse zeichnen sich dadurch aus, daß aufgrund des langen Identifizierers auch die Gesamtlänge der zugehörigen Botschaft in Bezug auf die Anzahl erforderlicher Bits in jedem Fall lang ist. Dies hat bei gegebener Bitrate zur Konsequenz, daß nur eine im Vergleich zu Botschaften mit kurzen Identifizierern deutlich geringere Anzahl von Botschaften pro Zeiteinheit übertragen werden kann. Dieser dadurch bedingten geringen Effizienz steht als Vorteil eine entsprechend erweiterte Vielfalt hinsichtlich der Vergabemöglichkeit von Prioritäten für die Zuteilung des seriellen Busses und/oder von Namen zur Kennzeichnung der zu übertragenden Botschaften gegenüber.

Wie schon in der Beschreibung des Standes der Technik dargelegt ist, ist kein Protokoll bekannt, das in Abhängigkeit von dem durch die Anwendung bestimmten Optimierungsziel die wahlfreie Verwendung von Botschaften mit kurzen oder langen Identifizierern zuläßt, derart, daß diese Botschaten in beliebiger Reihenfolge über denselben seriellen Bus übertragen werden können.

Es ist damit nicht möglich, innerhalb eines seriellen Bussystems auf Botschaftsebene durch die Wahl von kurzen und/oder langen Identifizierern das Optimimum zwischen Übertragungskapazität und Prioritäts-/Namensraum zu wählen.

Aufgabe der Erfindung ist deshalb die Schaffung eines Verfahrens zum Betreiben einer DV-Anlage sowie eines Verfahrens zum Aufbau von Botschaften, die flexibel bzgl. den jeweiligen Anforderungen sind.

### Vorteile der Erfindung

Das erfindungsgemäße Verfahren mit den kennzeichnenden Merkmalen der Ansprüche hat gegenüber dem Stand der Technik den Vorteil, daß innerhalb ein und desselben Bussystems mit ein und demselben Protokoll Botschaften mit Identifizierern unterschiedlicher Länge in konsistenter Weise und wechselvirkungsfrei übertragen werden können.

Damit kann jeder einzelnen Botschaft ein Identifizierer mit einer durch die Anwendung bestimmten Länge zugeordnet werden. Somit muß im Falle geringer Anforderungen an die Länge des Identifizierers nicht grundsätzlich mehr Übertragungskapazität als notwendig verbraucht werden, und andererseits können höhere Anforderungen an die Länge des Identifizierers auf Botschaftsebene individuell abgedeckt werden.

Diese Klassen von Identifizierern werden im erfindungsgemäßen Verfahren von ein und demselben Protokoll in ein und demselben Bussystem in konsistenter Weise unterstützt.

Insbesondere ist eipe mögliche Ausprägung des erfindungsgemäßen Verfahrens in der Weise möglich, daß alle Klassen von Identifizierern jeweils für sich einen linearen, unsegmentierten Prioritäts- und/oder Namensraum aufspannen. Dafür ist nicht erforderlich, daß die Identifizierer in den Botschaften zusammenhängend über den seriellen Bus übertragen werden. Die Größe dieser Prioritäts- und/oder Namensräume ist durch die Längen der jeweiligen Identifizierer bestimmt.

### Zeichnung

Ausführungsbeispiele der Erfindung sind im folgenden näher beschrieben und erläutert. Es zeigen
- Fig. 1:: Ausschnitt aus einer Botschaft eines an sich bekannten CAN-Protokolls gemäß der Veröffentlichung 'Controller Area Netvork (CAN)' bei ISO/TC22/SC3/WG1 N422E, bestehend aus den Bitfeldern Start-of-Frame, Arbitration Field, Control Field und Data Field.
- Fig. 2:: Ausschnitt aus einer Botschaft eines auf dem bekannten CAN-Protokoll aufbauenden, erfindungsgemäßen Protokolls, das kurze und lange Identifizierer zuläßt, bestehend aus Start-of-Frame, Arbitration Field mit kurzem Identifizierer, Control Field, Data Field.
- Fig. 3:: Ausschnitt aus einer Botschaft eines auf dem CAN-Protokoll aufbauenden, erfindungsgemäßen Protokolls, das kurze und lange Identifizierer zuläßt, bestehend aus Start-of-Frame, Arbitration Field mit langem Identifizierer, Control Field, Data Field.
- Figur 4a:: Zustandsdiagramm einer möglichen, für den Empfang von Botschaften sowohl mit langen als auch mit kurzen Identifizierern ausgelegten Zustandsmaschine
- Figur 4b:: Fortsetzung des Zustandsdiagramms von Fig. 4a
- Figur 5a:: Zustandsdiagramm einer möglichen, für das Senden von Botschaften sowohl mit langen als auch mit kurzen Identifizierern ausgelegten Zustandsmaschine
- Figur 5b:: Fortsetzung des Zustandsdiagramms von Fig. 5a
- Figur 6:: eine schematische Darstellung eines Datenverarbeitungssystems mit einer linearen Busstruktur für den Einsatz in einem Kraftfahrzeug
- Figur 7:: ein Blockschaltbild eines CAN-Controllers

### Beschreibung der Ausführungsbeispiele

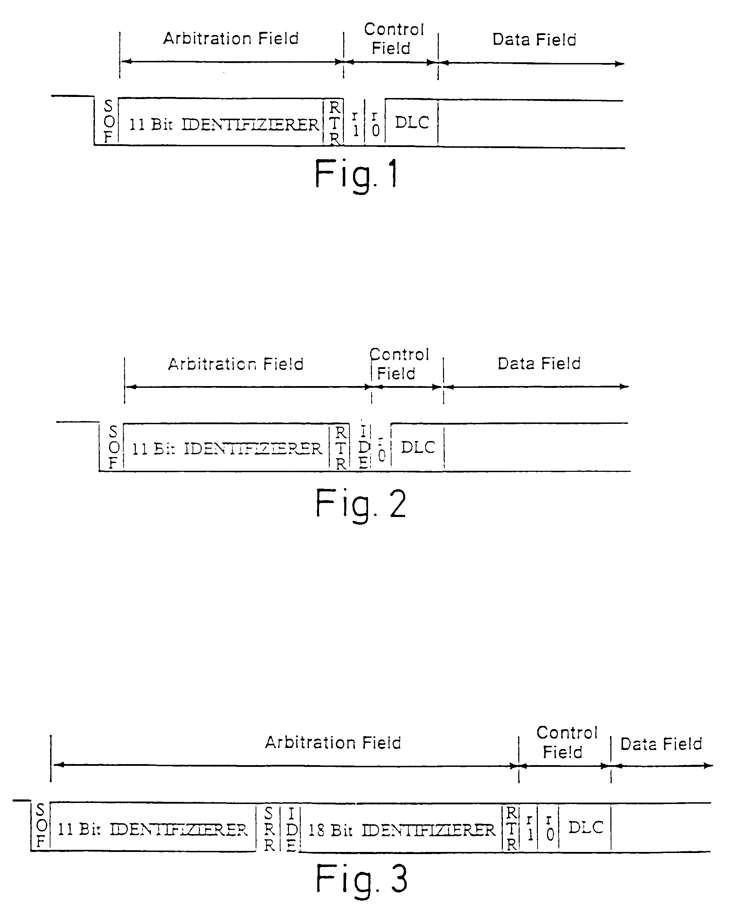

Fig. 1 zeigt den Ausschnitt einer Botschaft gemäß der bisherigen Definition des CAN-Protokolls.

Der 11-Bit-lange Identifizierer und das RTR bilden zusammen das Arbitration Field. Das Arbitration Field ist so definiert, daß es genau diejenigen Bits umfaßt, die für die eindeutige Entscheidung über die Buszuteilung im Falle mehrerer um den Bus konkurrierender Botschaften genutzt werden. Wenn die Übertragung mehrerer Botschaften gleichzeitig beginnt, dann wird während der Übertragung des Arbitration Field festgestellt, welche Botschaft die Buszuteilung erhalten soll. Nach dem Senden des Arbitration Field ist genau eine Botschaft übrig geblieben, die nun bis zu ihrem Ende weiter gesendet wird. Auf das Arbitration Field folgen 2 reservierte Bits r1 und r0, die gemäß der Festlegung des CAN-Protokolls dominant gesendet werden.

Fig. 2 zeigt den Ausschnitt einer Botschaft im Standardformat des erfindungsgemäßen Protokolls, d.h. in einer beispielhaften Ausführung mit z.B. 11 Bit langem Identifizierer. Das in Fig. 2 beschriebene Standardformat unterscheidet sich von dem in Fig. 1 beschriebenen Format einer Botschaft gemäß der Definition des CAN-Protokolls durch die Ergänzung um ein IDE-Feld, das wenigstens ein Bit umfaßt.

Das IDE-Feld wird in dem erfindungsgemäßen Protokoll zur Entscheidung über die Buszuteilung herangezogen, indem es gestattet, Botschaften im Standardformat von Botschaften im erweiterten Format (s. Fig. 3) zu unterscheiden. Das IDE-Feld ist gemäß der Definition des Arbitration Field daher Teil des Arbitration Field.

Bei davon abweichender Definition des Arbitration Field kann das IDE-Feld, ohne die Funktion zu verändern, auch einem anderen Bitfeld zugeordnet werden.

In dem in Fig. 2 dargestellten Ausführungsbeispiel ist das IDE-Feld durch ein Bit (nachfolgend IDE-Bit genannt) repräsentiert. Die Bitposition des IDE-Bits in Fig. 2 entspricht der des reservierten Bits r1 in Fig. 1. Im Standardformat wird das IDE-Bit genau wie r1 dominant gesendet. Somit sind in dem Ausführungsbeispiel das Standardformat gemäß Fig. 2 und das Botschaftsformat gemäß Fig. 1 identisch. Eine Einbeziehung des r0-Bits gemäß Fig. 1 in das IDE-Feld ist ebenfalls möglich.

Fig. 3 zeigt den Ausschnitt einer Botschaft im erweiterten Format des erfindungsgemäßen Protokolls.

Anstelle des RTR-Bits in Fig. 2 steht hier an der entsprechenden Position ein SRR-Bit. Das darauf folgende IDE-Bit steht an der gleichen Bitposition wie im Standardformat, wird aber im Gegensatz zur Definition des Standardformats rezessiv gesendet.

Auf das IDE-Bit folgt der 2. Abschnitt des Identifizierers, dessen Länge in Fig. 3 mit 18 Bits angegeben ist. Anstelle der Länge 18 sind auch kleinere und größere Längen wählbar, z.B. 19 oder 21 oder ein anderer Wert. Die Gesamtlänge des Identifizierers wäre dann nicht 29 wie in Fig. 3, sondern 30 bzw. 32 oder ein entsprechend anderer Wert. Hinter dem 2. Abschnitt des Identifizierers folgt das RTR-Bit sowie die reservierten Bits r1, r0.

Diese 3 Bits entsprechen genau den dem Identifizierer in Fig. 1 folgenden 3 Bits. Die Bedeutung dieser 3 Bits ist näher in der Patentschrift DE-C-3506118 offenbart. Man hätte die Bits r1 und/oder r0 auch veglasssen können, ohne das Funktionieren des erfindungsgemäßen Protokolls zu gefährden, da r1 und r0 reservierte Bits und damit funktionell nicht belegt sind.

Wie vom CAN-Protokoll bekannt ist, nutzt auch das Protokoll gemäß Fig. 2 und 3 zwei Bit-Zustände mit den Eigenschaften dominant und rezessiv, wobei ein dominates Bit ein gleichzeitig gesendetes, rezessives Bit überschreibt. Zur Kennzeichnung der Länge des in der jeweiligen Botschaft verwendeten Identifizierers dient das IDE-Feld bzv. IDE-Bit.

Für die Lage dieses Feldes innerhalb von Botschaften mit kurzem Identifizierer kommen alle Positionen innerhalb des auf das Standardformat gemäß der vorliegenden Erfindung (Fig. 2) bezogene Arbitration Field in Frage.

Die sich bei der von SOF ausgehenden Durchnumerierung der Bitpositionen in Botschaften mit kurzen Identifizierern ergebenden Nummern für die Bits des IDE-Feldes bestimmt auch in Botschaften mit langen Identifizierern bei gleichartiger Durchnumerierung der Bitpositionen die Lage der Bits des IDE-Feldes.

In diesem Ausführungsbeispiel wurde für die Bitposition des IDE-Bits die letztmögliche Bitposition hinter dem RTR-Bit gewählt. Je nach Anforderung ist aber auch jede dem RTR-Bit gemäß Fig. 2 bzv. dem SRR-Bit gemäß Fig. 3 vorhergehende Bitposition zveckmäßig, die hinter Start-of-Frame liegt.

Anstelle des RTR-Bits, wie es in Fig. 2 eingezeichnet ist, gibt es in Fig. 3 das SRR-Bit. Im Ausführungsbeispiel wird dieses SRR-Bit für Botschaften im erweitertem Format gemäß der Erfindung stets mit rezessivem Pegel gesendet.

Wenn die Übertragung von Botschaften im Standardformat und von Botschaften in erweitertem Format gleichzeitig begonnen wird und die ersten 11 Bits der Identifizierer der Botschaften im erweiterten Format mit den Identifizierern der Botschaften im Standardformat übereinstimmen, so hat diese Wahl des SRR-Bits zur Folge, daß sich am Ende eine Botschaft im Standardformat gegen die Botschaften im erweiterten Format durchsetzt.

Damit hat bei Übereinstimmung der ersten 11 Bits eines langen Identifizierers mit den entsprechenden Bits eines kurzen Identifizierers die Botschaft, die aufgrund des kurzen Identifizierers zu höherer Übertragungseffizienz führt, Vorrang.

Dies gilt unabhängig davon, ob die Botschaften im Standardformat und die Botschaften im erweiterten Format Data-Frames oder Remote-Frames sind, d.h. es gilt für alle 4 möglichen Kombinationen.

Die oben beschriebene Festlegung des SRR-Bits gewährleistet, daß die Buszuteilung ausschließlich durch die Identifizierer und damit durch die zugeordneten Prioritäts- und/oder Namnesräume bestimmt ist.

Das RTR-Bit als Unterscheidungsmerkmal zwischen Data Frames und Remote Frames hat somit keinen Einfluß auf das Prioritätsverhältnis in Bezug auf die Klassen zwischen langen und kurzen Identifizierern.

Definiert man in Abweichung vom dargestellten Ausführungsbeispiel das SRR-Bit bei Botschaften im erweiterten Format stets als dominant, so ergibt sich das folgende:

Wenn die Übertragung von Botschaften im Standardformat und von Botschaften in erweitertem Format gleichzeitig begonnen wird und die ersten 11 Bits der Identifizierer der Botschaften im erweiterten Format mit den Identifizierern der Botschaften im Standardformat übereinstimmen, so hat diese Wahl des SRR-Bits zur Folge, daß sich am Ende eine Botschaft im erweiterten Format gegen Remote-Frames im Standardformat durchsetzt, während sich Data Frames im Standardformat gegen Botschaften im erweiterten Format durchsetzen.

Die wahlfreie Nutzung von Botschaften mit kurzen und langen Identifizierern gestattet eine besonders vorteilhafte Anvendung bei solchen Prozeßsteuerungen mit verteilten Steuer- und Regeleinheiten, die dadurch gekennzeichnet ist, daß eine der Einheiten mittels einer einzigen Botschaft mit kurzem Identifizierer eine Gruppe von Prozessen in mehreren Einheiten anstößt, als Folge davon diese Einheiten und/oder Prozesse ihrerseits Botschaften mit jeweils langen Identifizierern an die auslösende Einheit zurücksenden.

Eine besonders vorteilhafte Nutzung von Speicherplatz in den Steuer- und Regeleinheiten wird erreicht, wenn die auslösende Einheit nur einen Speicherbereich für eine einzige Botschaft (siehe hierzu die bereis oben erwähnte DE 3506 811) bereitstellen muß, aus dem heraus die auslösende Botschaft gesendet werden kann und in dem alle rückgesendeten Botschaften empfangen werden können.

Solche Problemstellungen sind z.B. typisch für die Diagnose in verteilten Systemen und das Netzwerkmanagement.

Bei der Diagnose fragt typischerweise eine Einheit von allen anderen Einheiten deren Status und Fehlerzustände ab. Die Zuordnung aller der dafür erforderlichen Botschaften zu einem gemeinsamen Speicherbereich, dessen Größe die Speicherung genau der größten dieser Botschaften erlaubt, kann besonders einfach dann organisiert werden, wenn alle Identifizierer der betroffenen Botschaften in den entsprechenden Bitpositionen übereinstimmen, beginnend vom 1. Bit des kurzen Identifizierers der auslösenden Botschaft bis zu dessen letztem Bit. Die dadurch noch nicht festgelegten Bits der langen Identifizierer der rückgesendeten Botschaften können z.B. dazu benutzt werden, individuelle Herkmale der Einheiten, etwa deren Namen oder Adressen, zu kodieren.

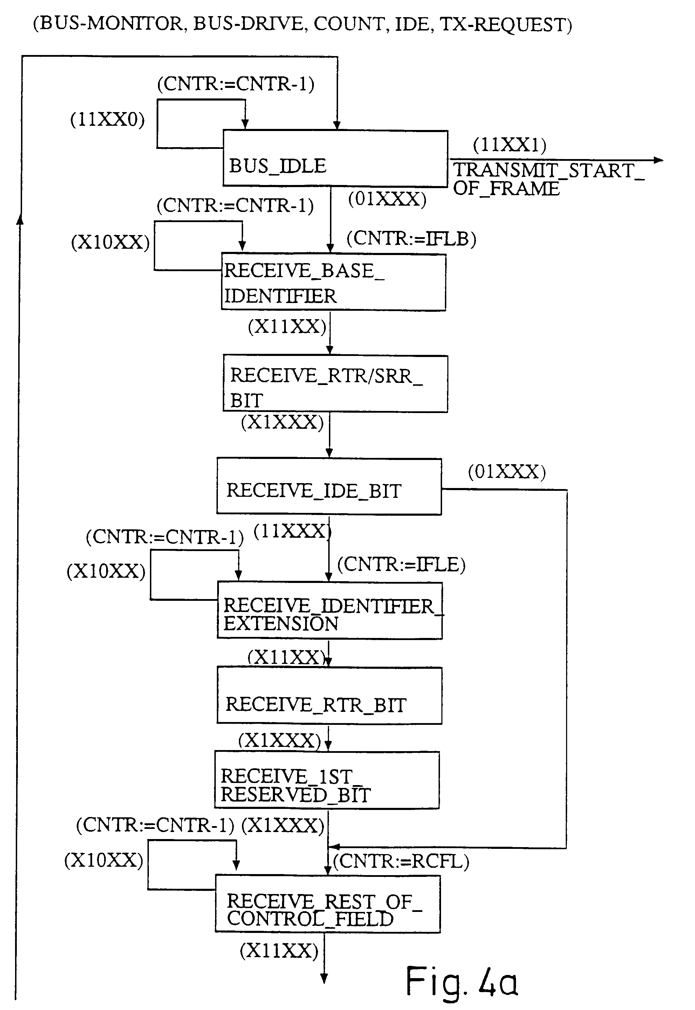

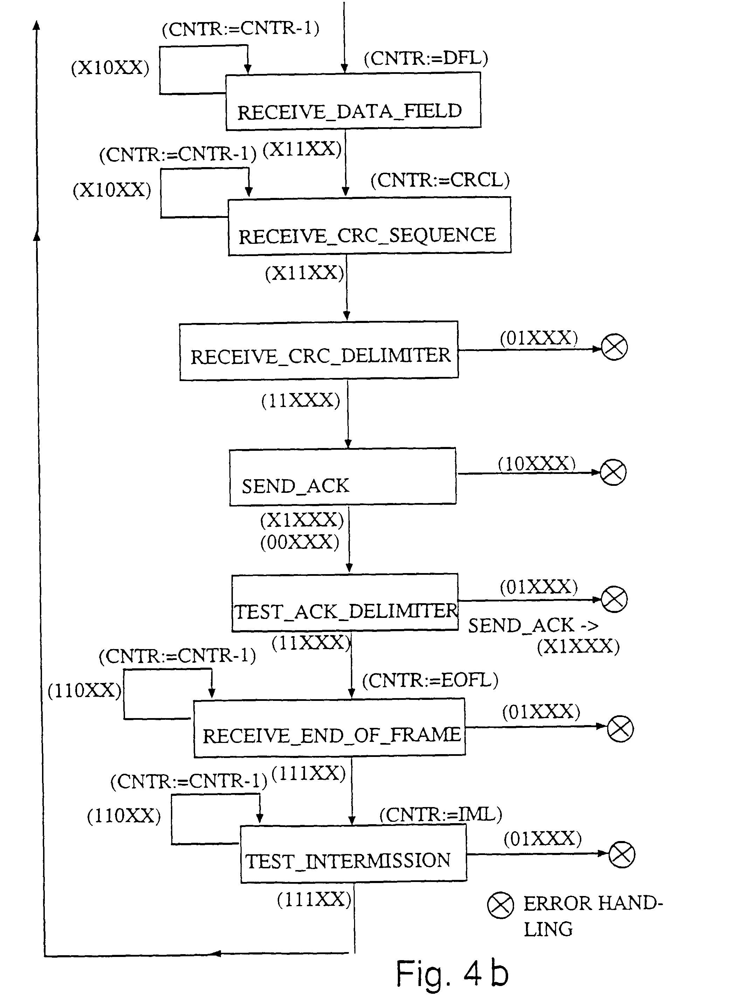

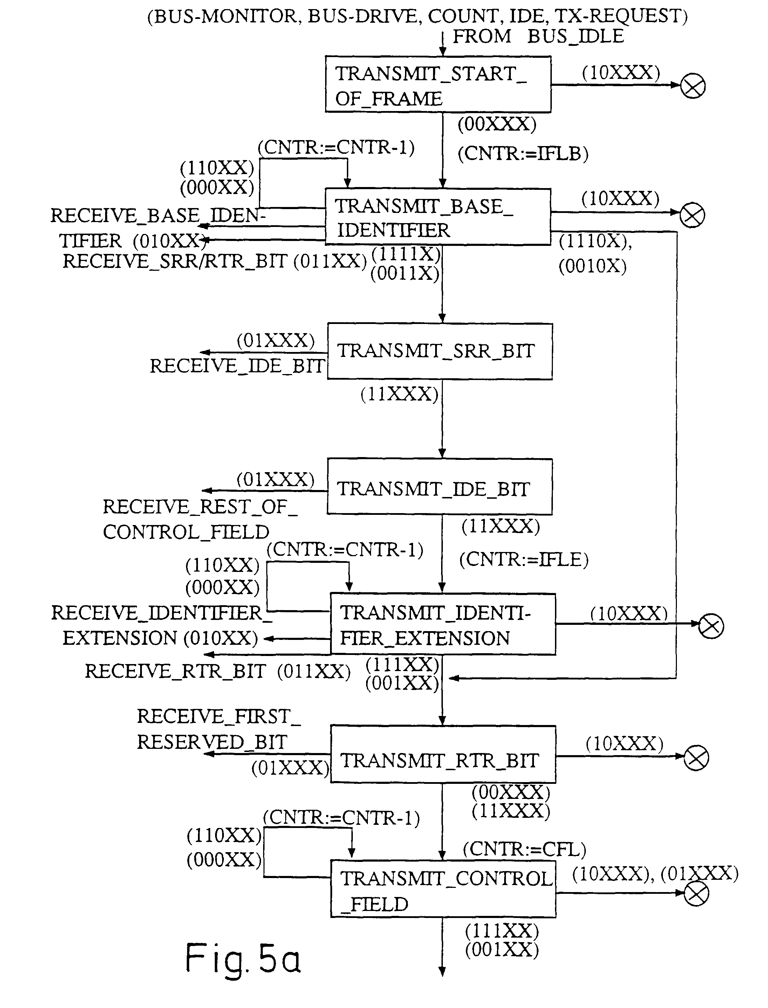

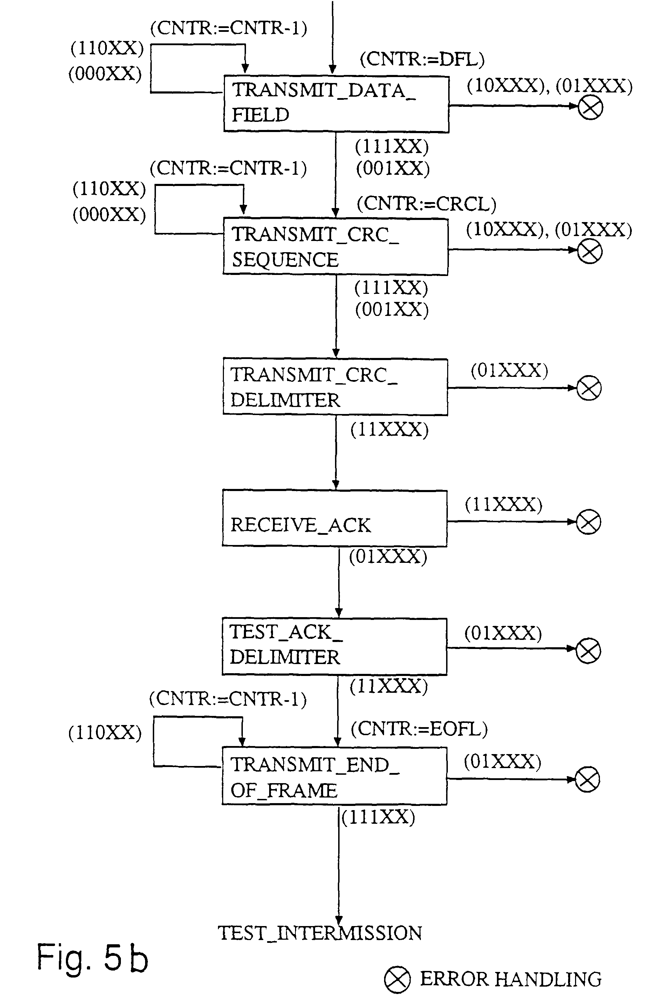

Im folgenden werden die Zustandsdiagramme in den Figuren 4a, 4b, 5a und 5b erläutert.

Jeder Rechteckrahmen stellt einen Systemzustand dar. Die Übergänge zwischen den Zuständen, die von Eingangs- und Zustandsvariablen abhängen, sind durch gerichtete Verbindungslinien dargestellt. Die Zustandsübergänge erfolgen stets mit der aktiven Flanke des Bustaktes. Mit der gleichen Taktflanke werden Ausgangsdaten auf die Busleitung gelegt. Der tatsächliche Buspegel wird erst kurz vor der nächsten aktiven Bustaktflanke abgetastet. Nach einem BUS-IDLE-Zustand wird der Bustakt auf den nächsten Buspegelübergang von High nach Low synchronisiert. Die Eingangs- und Zustandsvariablen können geordnet und zu einem Entscheidungsvektor zusammengefaßt werden.

Der Entscheidungsvektor für die Zustandsdiagramme in den Figuren 4a, 4b, 5a, und 5b hat folgende Form:
(BUS-MONITOR, BUS-DRIVE, COUNT, IDE, TX-REQUEST)

Es bedeuten:
BUS-MONITOR
   Eingangsvariable, die den auf der Busleitung abgetasteten Logikpegel wiederspiegelt.
   BUS-MONITOR = 0 entspricht dominantem Buspegel (Low).
   BUS-MONITOR = 1 entspricht rezessivem Buspegel (High)
BUS-DRIVE
   Zustandsvariable, die den Logikpegel angibt, der in diesem Zustand gesendet wird.
   BUS-DRIVE = 0 entspricht dominantem Sendepegel (Low)
   BIS-DRIVE = 1 entspricht rezessivem Sendepegel (High)
COUNT
   Zustandsvariable, die angibt, ob der interne Zähler (CNTR) abgelaufen ist. Dieser Zähler wird nicht in allen Zuständen benötigt. Falls benötigt, wird der Zähler beim Übergang in den entsprechenden Zustand gesetzt.
   COUNT = 0 entspricht: Zähler noch nicht abgelaufen (CNTR > 0)
   COUNT = 1 entspricht: Zähler abgelaufen (CNTR = 0)
IDE
   Zustandsvariable, die angibt, ob ein kurzer oder ein langer Identifizierer zu senden ist.
   IDE = 0 entspricht: ein kurzer Identifizierer ist zu senden.
   IDE = 1 entspricht: ein langer Identifizierer ist zu senden.
TX-REQUEST
   Eingangsvariable, die angibt, ob eine Botschaft zum Absenden bereit liegt, so daß an der nächsten Buszuteilungsprozedur teilgenommen werden muß.
   TX-REQUEST = 0 entspricht: Sendeauftrag liegt nicht vor
   TX-REQUEST = 1 entspricht: Sendeauftrag liegt vor

Mit dem Entscheidungsvektor ist eindeutig festgelegt, in welchen Folgezustand gegangen wird. Der Zustandsgraph kann deshalb mit Hilfe der Entscheidungsvektoren beschrieben werden. Ist für ein bestimmtes Element im Zustandsvektor ein "X" angegeben, so bedeutet dies, daß die entsprechende Variable für die Entscheidung nicht relevant ist (die Variable darf "0" oder "1" sein).

Figur 4a zeigt das Zustandsdiagramm für den Empfang der Botschaft z. B. nach Figur 2 oder 3. Aus dem Zustand BUS-IDLE kommt man durch Erkennen von START-OF-FRAME auf dem Bus in den Zustand RECEIVE-BASE-IDENTIFIER. Beim Zustandsübergang wird der Zähler CNTR mit dem Wert ISLB (IDENTIFIER-FIELD-LENGTH-BASE) vorbelegt. Es kann z. B. IFLB = 11 sein. Dieser Wert gibt an, wieviel Erkennungsbits für kurze Identifizierer vereinbart wurden. Mit jedem empfangenen Kennungsbit wird die Schleife des Zustands RECEIVE-BASE-IDENTIFIER einmal durchlaufen und der Zähler wird dekrementiert. Nach Ablaufen des Zählers geht das System in den Zustand RECEIVE-RTR/SRR-BIT und danach sofort in den Zustand RECEIVE-IDE-BIT über. Wenn BUS-MONITOR = 0 ist, dann enthält die Botschaft einen kurzen Identifizierer und die Zustände RECEIVE-IDENTIFIER-EXTENSION, RECEIVE-RTR-Bit und RECEIVE-FIRST-RESERVED-BIT werden übersprungen. Wenn BUS-MONITOR = 1 ist, dann geht die Zustandsmaschine in den Zustand RECEIVE-IDENTIFIER-EXTENSION über und der Zähler wird mit dem Wert IFLE (IDENTIFIER-FIELD-LENTH-EXTENSION) vorbelegt. Wenn z. B. IFLE = 18, dann übersteigt die Anzahl von Kennungsbits langer Identifizierer die Anzahl von Kennungsbits kurzer Identifizierer um genau 18. Nach Ablaufen des Zählers geht das System in den Folgezustand RECEIVE-RTR-BIT über. Das Control-Field des CAN-Protokolls ist gemäß des ISO-Dokuments ISO/TC22/SC3/WG1N422E 6 Bits lang. Das IDE-Bit ersetzt das in diesem Dokument ausgewiesene erste "reserved Bit" des Control-Field. Damit ist im Falle kurzer Identifizierer das Control-Field 5 Bits lang. Im Falle langer Identifizierer ist das Control-Field dagegen 6 Bits lang (Figur 3). Im Falle langer Identifizierer wird das erste "reserved Bit" im Zustand RECEIVE-FIRST-RESERVED-BIT behandelt. Somit bleiben sowohl im Falle kurzer wie auch langer Identifizierer 5 Bits übrig. Diese werden empfangen, wenn die Zustandsmaschine im Zustand RECEIVE-REST-OF-CONTROL-FIELD übergeht. Der Zähler CNTR wird für beide Formate mit dem Wert RCFL=5 vorbelegt. Sind alle Bits des Control-Field empfangen, so wird als nächstes, wie in Figur 4b gezeigt, im Zustand RECEIVE-DATA-FIELD das Datenfeld empfangen. Als Sonderheit gilt hier, daß der Zähler nicht, mit einer Konstanten, sondern mit der Variablen DFL (Data-Field-Length) vorbelegt wird. DFL kann z.B. die Werte 8, 16, 32 oder 64 annehmen. Nachdem der Zähler abgelaufen ist, wird im Zustand RECEIVE-CRC-SEQUENCE das CRC-Kontrollwort (CRC-SEQUENCE) empfangen. Hierzu wird zunächst der Zähler CNTR mit CRCL=15 (CRC-SEQUENCE-LENGTH) vorbelegt. Nach dem Empfang des letzten CRC-Bits wird die Zustandsvariable CRC-ERROR gesetzt (CRC-ERROR=6 bedeutet kein Fehler, CRC-ERROR=1 bedeutet Fehler im Übertragungsrahmen). Das CRC-Kontrollwort muß stets durch ein Bit (CRC-Delimiter) mit dem Pegel HIGH abgeschlossen sein. Dies wird im Zustand RECEIVE-CRC-DELIMITER geprüft. Bei falschem Buspegel wird zur Fehlerbehandlung übergegangen. Im nächsten Bustaktzyklus müssen die Empfänger den Empfang der Botschaft bestätigen. Dies geschieht im Zustand SEND-ACK durch Senden eines Low-Pegels für fehlerfreien Empfang bzw. durch Senden eines High-Pegels im Fehlerfall. Beim Entdecken des Buspegels High wird, falls der dominante Pegel für das Bussystem Low gesetzt wurde, zur Fehlerbehandlung übergegangen.
Auf das erste Acknowledge-Bit folgt der ACK-Delimiter, der stets den Pegel High haben muß. Dieser Pegel wird im Zustand TEST-ACK-DELIMITER von allen Empfängern ausgegeben. Wird der Pegel Low empfangen, oder, wenn zuvor ein CRC-Fehler festgestellt worden ist, so wird zur Fehlerbehandlung übergegangen. Beim Zustandsübergang nach RECEIVE-END-OF-FRAME wird der Zähler CNTR mit EOFL = 7 (End-Of-Frame-Length) initialisiert. Falls während RECEIVE-END-OF-FRAME der Buspegel Low empfangen wird, wird zur Fehlerbehandlung übergegangen. Im fehlerfreien Fall wurde die Botschaft jetzt vollständig empfangen. Als nächstes folgt der Zustand TEST-INTERMISSION der aus IML = 3 (Intermission-Length) Zyklen besteht. Der Buspegel muß dauernd High sein, sonst wird zur Fehlerbehandlung übergegangen. Nach Ablauf des Zählers IML wird in den Folgezustand BUS-IDLE übergegangen, mit dem ein neuer Empfangs- und Sendezyklus beginnt.

Figur 5a zeigt das Zustandsdiagramm für den Sende-Modus der Zustandsmaschine. Vom Zustand BUS-IDLE aus erfolgt der Übergang in den Sendemodus dann, wenn vor oder während BUS-IDLE eine Sendeanforderung eintrifft (TX-REQUEST = 1). Siehe hierzu das Zustandsdiagramm in Figur 4a. Das Senden einer Botschaft beginnt mit der Botschaft TRANSMIT-START-OF-FRAME, in dem der dominante Sendepegel "0" ausgegeben wird. Falls eine Störung den dominaten Pegel "0" in "1" verfälscht, wird zur Fehlerbehandlung übergegangen. Sonst folgt im Zustand TRANSMIT-BASE-IDENTIFIER die Buszuteilungsprozedur. Am Anfang wird der Zähler CNTR mit dem Wert IFLB (Identifier-Field-Length-Base) vorbelegt. Es kann z. B. IFLB = 11 sein. Dieser Wert gibt an, wieviele Kennungsbits für kurze Identifizierer vereinbart wurden. Im Zustand TRANSMIT-BASE-IDENTIFIER wird verblieben (lediglich der Zähler wird dekrementiert), wenn der empfangene Pegel dem gesendeten entspricht und der Zähler noch nicht abgelaufen ist. Der Zustand TRANSMIT-BASE-IDENTIFIER wird verlassen, wenn
- der gesendete rezessive "1"-Pegel durch "0" überschrieben wurde. Die Buszuteilung ist damit verloren. Bei nicht abgelaufenem Zähler ist der Folgezustand RECEIVE-BASE-IDENTIFIER, bei abgelaufenem Zähler RECEIVE-STR/RTR-BIT,
oder
- ein gesendeter dominanter "0"-Pegel in "1" verfälscht wird. Der Folgezustand ist die Fehlerbehandlung.
oder
- für die Bits des Base-Identifier die empfangenen Pegel jeweils den gesendeten Pegeln entsprechen und der Zähler abgelaufen ist. In diesem Fall ist die Arbitrierung bis dahin nicht verloren worden.

Der Folgezustand nach TRANSMIT-BASE-IDENTIFIER hängt von dem Wert des Eintrags IDE im Entscheidungsvektor ab. Ist dieser Wert "1", d. h. wenn eine Botschaft im erweiterten Format zu übertragen ist, so folgt der Zustand TRANSMIT-SRR-BIT. Es wird ein rezessives Bit gesendet. Sollte ein dominantes Bit abgetastet werden, dann ist die Arbitrierung verloren und die Zustandsmaschine geht in den Zustand RECEIVE-IDE-BIT über. Der Folgezustand nach TRANSMIT-SRR-BIT ist TRANSMIT-IDE-BIT. Es wird ein rezessives Bit gesendet. Wird die Arbitrierung bis dahin nicht verloren, so folgt der Zustand TRANSMIT-IDENTIFIER-EXTENSION. Am Anfang wird der Zähler mit dem Wert IFLE (Identifier-Field-Length-Extension) vorbelegt. Es kann z. B. IFLE = 18 sein. Dieser Wert gibt an, um wieviele Kennungsbits lange Identifizierer länger sind als kurze Identifizierer. In dem Zustand TRANSMIT-IDENTIFIER-EXTENSION wird verblieben (lediglich der Zähler wird dekrementiert), wenn der empfangene Pegel dem gesendeten entspricht und der Zähler noch nicht abgelaufen ist.

Der Zustand TRANSMIT-IDENTIFIER-EXTENSION wird verlassen, wenn
- der gesendete rezessive "1"-Pegel durch "0" überschrieben wurde. Die Buszuteilung ist damit verloren. Bei nicht abgelaufenem Zähler ist der Folgezustand RECEIVE-IDENTIFIER-EXTENSION bei abgelaufenem Zähler RECEIVE-RTR-BIT.
oder
- ein gesendeter dominanter "0"-Pegel in "1" verfälscht wird. Der Folgezustand ist die Fehlerbehandlung.
oder
- für die Bits der Identifier-Extension die empfangenen Pegel jeweils den gesendeten Pegeln entsprechen und der Zähler abgelaufen ist. In diesem Fall ist die Arbitrierung bis dahin nicht verloren worden.

Wird die Arbitrierung bis dahin nicht verloren, oder wenn der Eintrag IDE im Entscheidungsvektor während des Zustands TRANSMIT-BASE-IDENTIFIER 0 ist, so ist der Folgezustand TRANSMIT-RTR-BIT. Das RTR-BIT kann dominant oder rezessiv gesendet werden. Wird ein rezessiv gesendetes Bit durch ein dominant gesendetes Bit überschrieben, so wurde die Buszuteilung verloren und als nächstes der Zustand RECEIVE-FIRST-RESERVED-BIT eingenommen. In den anderen Fällen bis auf den Übergang zur Fehlerbehandlung ist der Folgezustand TRANSMIT-CONTROL-FIELD. Beim Einstieg in den Zustand TRANSMIT-CONTROL-FIELD wird der Zähler CNTR mit CFL = 6 (Control-Field-Length) initialisiert. Da die Buszuteilung beendet ist, muß ab jetzt der Sende- und Empfangspegel stets gleich sein mit Ausnahme des im Zustand RECEIVE-ACK empfangenen Bits. Ist dies nicht der Fall, so wird zur Fehlerbehandlung übergegangen. Bei nicht abgelaufenem Zähler und bei Flankenwechsel innerhalb der letzten 5-Takt-Zyklen bleibt das System im Zustand TRANSMIT-CONTROL-FIELD, lediglich der Zähler wird dekrementiert. Die Vorgänge im Zustand TRANSMIT-CONTROL-FIELD gelten auch für die Zustände TRANSMIT-DATA-FIELD und TRANSMIT-CRC-SEQUENCE (siehe Figur 5b). Beim Einstieg in TRANSMIT-DATA-FIELD wird der Zähler CNTR mit der Variablen DFL (DATA-FIELD-LENGTH) vorbelegt, die die Werte 0, 8, 16, 24, 32, 40, 48, 56 oder 64 annehmen kann. Beim Einstieg in TRANSMIT-CRC-SEQUENCE wird der Zähler mit der Konstanten CRCL = 15 (CRC-FIELD-LENGTH) vorbelegt. Im Anschluß an die CRC-Sequence muß der CRC-Delimiter übertragen werden. Dies geschieht im Zustand TRANSMIT-CRC-DELIMITER. Falls der gesendete High-Zustand nach Low verfälscht wird, wird zur Fehlerbehandlung übergegangen. Als nächstes wird das Acknowledge-Bit überprüft. Ein empfangener High-Pegel bedeutet, daß kein Teilnehmer die Botschaft fehlerfrei empfangen hat oder daß alle Teilnehmer eine falsche Rahmensynchronisation haben. Der Sender gibt deshalb bei der Fehlerbehandlung eine Fehlermeldung aus. Bei empfangenem Low-Pegel wird in den Folgezustand TEST-ACK-DELIMITER übergegangen. Der ACK-DELIMITER muß stets High sein. Ist dies nicht der Fall, so wird zur Fehlerbehandlung gesprungen. Das Botschaftsende wird im Zustand TRANSMIT-END-OF-FRAME übertragen. Da End-Of-Frame aus 7 High-Bits besteht, wird der Zähler CNTR mit EOFL = 7 (End-Of-Frame-Length) vorbelegt. Bei empfangenem High-Pegel bleibt das System im Zustand TRANSMIT-END-OF-FRAME, bis der Zähler abgelaufen ist und geht dann zu TEST-INTERMISSION über. Bei empfangenem Low-Pegel wird dagegen zur Fehlerbehandlung gesprungen. Mit dem Übergang in den Zustand TEST-INTERMISSION ist der Sende-Modus beendet. Der Zustand TEST-INTERMISSION ist mit dem im Empfangs-Modus beschriebenen identisch.

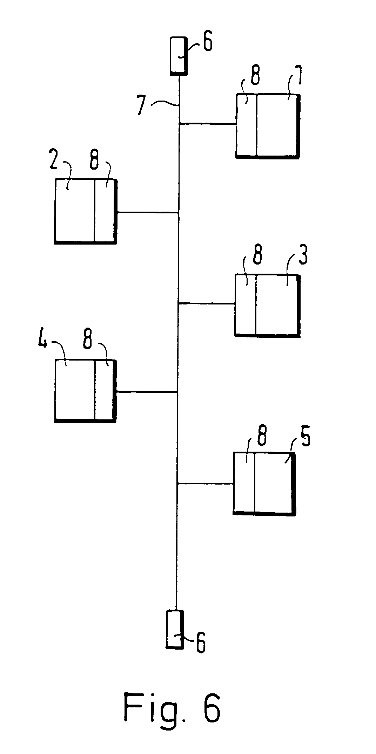

Figur 6 zeigt ein Schema einer Datenverarbeitungsanlage für den Einsatz in einem Kraftfahrzeug mit mehreren verteilt arbeitenden Steuergeräten, die über eine lineare Busstruktur miteinander verbunden sind. Die Steuergeräte sind: ein Motorsteuerungsgerät 1, ein Getriebesteuergerät 2, ein ABS-Steuergerät 3, ein Lenkungssteuergerät 4 und ein Klimagerät 5. Jedes der Geräte enthält einen Schnittstellenbaustein 8. Als möglicher Schnittstellenbaustein 8 kommt z. B. ein möglicher CAN-Controller in Frage, der die Datenübertragung nach dem CAN-Protokoll abwickeln kann. Er muß dabei Botschaftsformate für lange und kurze Formate verarbeiten können. Jeder Schnittstellenbaustein 8 ist an die Busverbindung 7 angeschlossen. Zum Abschluß der Busverbindung 7 ist an den Enden der Busverbindung 7 ein passiver Abschluß-Baustein 6 angebracht. Über diese Busverbindung 7 werden die Botschaften mit dem formalen Aufbau wie in den Figuren 1 bis 3 beschrieben, übertragen. So könnte z. B. das Motorsteuergerät 1, die Motordrehzahl des Kraftfahrzeuges, in dem das Datenverarbeitungssystem eingesetzt wird, erfassen und mit Hilfe einer Botschaft mit dem Aufbau nach Figur 2 an das Getriebesteuergerät 2 über die Busverbindung 7 senden. Ein anderes Beispiel ist die Erfassung der Motortemperatur seitens des Motorsteuergerätes 1. Diese Meßgröße ist auch für das Klimagerät 5 von Bedeutung und kann daher ebenfalls mit Hilfe einer Botschaft an das Klimagerät 5 übertragen werden. Da Temperaturveränderungen im Regelfall langsamer auftreten als Veränderungen der Motordrehzahl, brauchen die Botschaften zur Übertragung von Temperaturdaten nur mit geringerer Priorität als die Botschaften zur übertragung von Motordrehzahldaten ausgesendet zu werden. Somit kann die Botschaft, die Motortemperaturdaten überträgt, mit einem formalen Aufbau wie in Figur 3 beschrieben, übertragen werden. Zur Datenübertragung gibt diejenige Station, die die Daten senden möchte, einen Sendeauftrag an den ihr zugehörigen Schnittstellen-Baustein 8 aus. Der angesprochene Schnittstellen-Baustein 8 wickelt den Sendeauftrag selbständig ab und gibt anschließend eine Übertragungsmeldung an die Station aus. Die Übertragungsmeldung kann die erfolgreiche Abwicklung des Sendeauftrages, sowie auch etwaige Fehlermeldungen beinhalten.

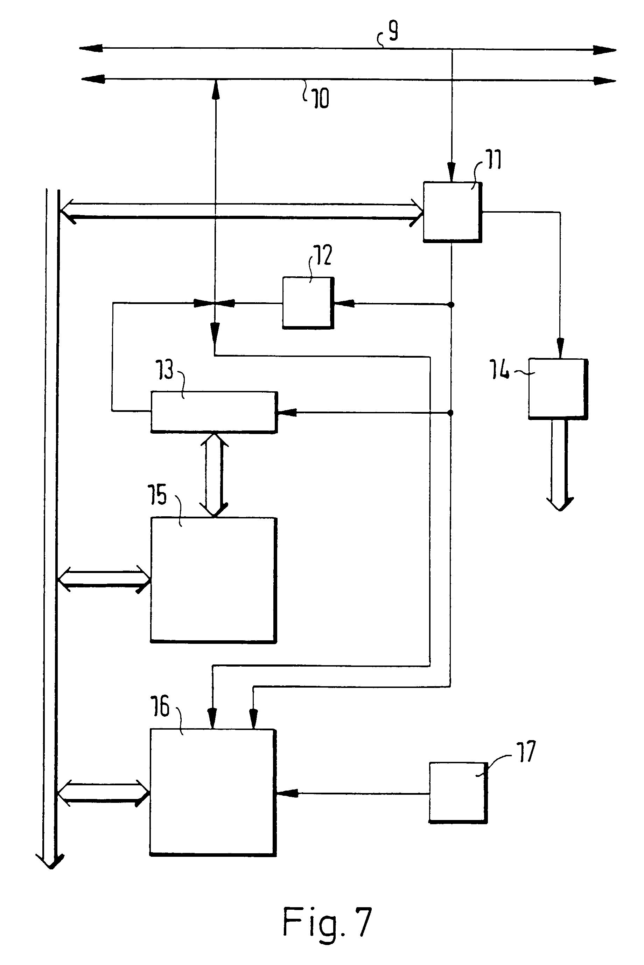

Figur 7 zeigt als Beispiel für einen Schnittstellen-Baustein 8 ein Blockschaltbild eines CAN-Controllers. Dieser ist von seinem Aufbau her zur Abwicklung des CAN-Protokolls ausgelegt. Er dient damit als Zustandsmaschine, die wie in den Figuren 4a, 4b, 5a und 5b beschrieben, funktioniert. Verbindungsleitung 9 ist die RxD-Leitung des CAN-Busses; Verbindungsleitung 10 ist die TxD-Leitung des CAN-Busses. Verbindungsleitung 9 ist an die Bitzeitenlogik (BTL) 11 angeschlossen. Von dieser gehen Verbindungsleitungen zum CRC-Register 12, Schieberegister 13, Zeittakt-Generator 14 und zum Bitstrom-Prozessor (BSP) 16 aus. Außerdem ist die Bitzeitenlogik 11 über einen bidirektionalen Bus an den Systembus der Station angeschlossen. Der Systembus ermöglicht den Austauch von Daten/Befehlen/Statusmeldungen zwischen CPU und Schnittstellen-Baustein 8 einer Station. Vom CRC-Register 12 geht eine Verbindungsleitung zum Bitstrom-Prozessor 16. Von dem Schieberegister 13 geht eine Verbindungsleitung zu der TxD-Leitung 10 der CAN-Busverbindung. Ein intelligenter Speicher 15 ist über einen bidirektionalen Bus an das Schieberegister 13 und an den Systembus der Station angeschlossen. Der Bitstrom-Prozessor 16 ist ebenfalls über einen bidirektionalen Bus an den Systembus der Station angeschlossen. Weiterhin ist in dem CAN-Controller eine Fehlerbehandlungslogik (EML) 17 enthalten, die über eine Verbindungsleitung an den Bitstrom-Prozessor 16 angeschlossen ist. Weitere Verbindungsleitungen gehen von dem Zeittakt-Generator 14 zu allen Steuerbausteinen des CAN-Controllers.

Die Bitzeitenlogik 11 stellt eine Logik zur Verfügung, mit der die Bitzeiten für die Datenübertragung über den CAN-Bus generierbar sind. Sie ist als programmierbare Einheit ausgebildet, mit der Systemparameter, wie die Baud-Rate, die Kompensation der Zeitverzögerung aufgrund der Buslaufzeiten und die Phasenverschiebung zur Einstellung des Abtastzeitpunktes während einer Bitzeit einstellbar sind. Sie führt ebenfalls die Buspegelabtastung abhängig von den eingestellten Systemparametern durch und liefert die Zustandsvariable BUS-MONITOR. Eine weitere Aufgabe der Bitzeitenlogik 11 ist die Synchronisation der Buspegel-Abtastung eines Schnittstellenbausteins 8 auf eine rezessiv/dominant Flanke, bei einem Start-of-Frame-Bit und bei jeder weiteren rezessiv/dominant Flanke, wenn der Schnittstellenbaustein 8 selbst kein dominantes Bit gleichzeitig sendet. Das CRC-Register 12 erzeugt den CRC-Code der Botschaft und fügt diesen Code nach den Daten-Bits in die Botschaft ein. Darüber hinaus führt das CRC-Register 12 die Prüfung des CRC-Code einer empfangenen Botschaft durch. Es gibt dann ggf. eine Fehlermeldung zu dem Bitstromprozessor 16 aus. Das Schieberegister 13 ermöglicht das serielle Senden/Empfangen von Daten. Der intelligente Speicher 15 kann parallel auf die Daten im Schieberegister zugreifen. Dies ist z. B. beim Akzeptanztest mit Hilfe des Identifizierers der empfangenen Botschaft notwendig. Der Zeittakt-Generator 14 erzeugt die Zeitsignale (Systemtakt, Bitzeitentakt etc.) für die verschiedenen Vorgänge im Schnittstellen-Baustein 8. Der intelligente Speicher 15 bietet Platz für 15 Sende/Empfangs-Objekte, die jeweils aus Identifier,
Controllbits und Datenbits bestehen, von jeweils 8 Byte Länge. Nach der Initialisierung kann der Speicher Empfang und Absendung von Daten ohne weitere CPU-Aktionen durchführen. Er enthält außerdem die Interrupt-Register mit entsprechender Steuerlogik, so daß z. B. nach dem korrekten Empfang von Botschaften eine Unterbrechungsanforderung über den Systembus an die CPU der Station weitergeleitet werden kann. Der intelligente Speicher führt außerdem den Akzeptanztest der empfangenen Botschaften durch. Die Fehlerbehanalungslogik 17 ist für die Fehlerbehandlung im CAN-Controller zuständig. Sie besitzt Mittel zur Aufstellung einer Fehlerstatistik für die Empfangs- und Sendevorgänge. Abhängig von dieser Fehlerstatistik wird der Status des CAN-Controllers eingestellt. Der Bitstrom-Prozessor 16 kontrolliert den Ablauf des Datenstromes zwischen Schieberegister 13, CRC-Register 12 und den Busleitungen 9 und 10. Er kontrolliert ebenfalls den parallelen Datenverkehr zwischen Schieberegister 13 und dem intelligenten Speicher 15, so daß die Vorgänge Empfang, Arbitrierung, Absendung und Fehlererkennung entsprechend dem CAN-Protokoll abgewickelt werden können. Eine weitere Aufgabe des Bitstromprozessors 16 ist die automatische Sendewiederholung von Botschaften, die aufgrund von äußeren Einflüssen oder Rauscheffekten fehlerhaft übertragen wurden. Der Bitstrom-Prozessor 16 enthält die Statusregister, die über den Systembus von der CPU der Station abgefragt werden können.

## Patentansprüche

1. Verfahren zum Aufbau von Botschaften für den Datenaustausch und/oder für die Synchronisation von Prozessen in Datenverarbeitungsanlagen, in denen mindestens zwei Teilnehmer über einen seriellen Bus miteinander verbunden sind, wobei sich eine Botschaft wenigstens aus einem Start-Element (Start-Bit, SOF), einem Identifizierer, Daten und einem Ende-Element (EOF) zusammensetzt, wobei der Identifizierer sowohl die Art der mit der Botschaft zu übertragenden Daten als auch die Priorität der Botschaft festlegt, wobei durch die Priorität der Zugang zum Bus bestimmt wird, dadurch gekennzeichnet, daß in der Botschaft ein wenigstens ein Bit aufweisendes Bitfeld (IDE-Feld) vorgesehen wird, in das eine Information zur Auswahl einer von mindestens zwei möglichen Identifiziererlängen für die zu übertragende Botschaft eingetragen wird.

2. Verfahren nach Anspruch 1, dadurch gekennzeichnet, daß das IDE-Feld zur Kennzeichnung der Länge des Identifizierers zu denjenigen Bits gehört, die im Falle kurzer Identifizierer für die Entscheidung über die Buszuteilung genutzt werden.

3. Verfahren nach Anspruch 1 oder 2, dadurch gekennzeichnet, daß das IDE-Feld zur Kennzeichnung der Länge des Identifizierers in allen Botschaften die gleiche Position einnimmt.

4. Verfahren nach einem der Ansprüche 1 - 3, dadurch gekennzeichnet, daß das IDE-Feld zur Kennzeichnung der Länge des Identifizierers wenigstens eines der reservierten Bits der CAN-Botschaft nutzt.

5. Verfahren nach Anspruch 1, dadurch gekennzeichnet, daß dann, wenn die Bit-Kombination bzgl. der Entscheidung über die Buszuteilung neben den den Prioritäts- und/oder Namensraum aufspannenden Identifizierungs-Bits wenigstens ein weiteres Bit enthält, dessen Wertigkeit verändert wird.

6. Verfahren nach Anspruch 5, dadurch gekennzeichnet, daß die Veränderung dergestalt erfolgt, daß die Priorität beim Buszugriff unabhängig von der Identifiziererlänge primär durch die durch den Identifizierer gegebene Priorität erfolgt.

7. Verfahren nach Anspruch 5, dadurch gekennzeichnet, daß mittels geänderter Wertigkeit bei Übereinstimmung einer ersten, durch die Länge des kurzen Identifizierers bestimmten Anzahl von Bits eines langen Identifizierers mit den entsprechenden Bits eines kurzen Identifizierers Botschaften mit kurzem Identifizierer den Vorrang haben.

8. Verfahren nach Anspruch 5, dadurch gekennzeichnet, daß das wenigstens eine änderbare Bit rezessiv gesendet wird.

9. Verfahren nach Anspruch 5, dadurch gekennzeichnet, daß das wenigstens eine änderbare Bit für alle Botschaften einheitlich dominant oder rezessiv festgelegt wird.

10. Verfahren nach wenigstens einem der Ansprüche 1 - 9, dadurch gekennzeichnet, daß das IDE-Feld ein Bit umfaßt und dominant gesetzt wird zur Kennzeichnung kurzer Identifizierer in Botschaften, die zum CAN-Protokoll kompatibel sind und rezessiv gesetzt wird in Botschaften mit langen Identifizierern.

11. Verfahren nach wenigstens einem der Ansprüche 5 - 10, dadurch gekennzeichnet, daß das wenigstens eine weitere Bit in Botschaften mit langen Identifizierern rezessiv gesetzt wird (SRR-Bit).

## Claims

1. Method for composing messages for interchanging data and/or for synchronizing processes in data processing systems in which at least two users are connected to one another via a serial bus, a message being made up of at least one start element (start bit, SOF), one identifier, data and one end element (EOF), the identifier defining both the type of the data to be transmitted with the message and the priority of the message, the priority determining the access to the bus, characterized in that, in the message, a bit field (IDE field) having at least one bit is provided in which field an information item for selecting one of at least two possible identifier lengths for the message to be transmitted is entered.

2. Method according to Claim 1, characterized in that the IDE field for identifying the length of the identifier belongs to the bits which are utilized for the decision on bus allocation in the case of short identifiers.

3. Method according to Claim 1 or 2, characterized in that the IDE field for identifying the length of the identifier assumes the same position in all messages.

4. Method according to one of Claims 1-3, characterized in that the IDE field for identifying the length of the identifier utilizes at least one of the reserved bits of the CAN message.

5. Method according to Claim 1, characterized in that, when the bit combination relating to the decision on the bus allocation contains, in addition to the identification bits spanning the priority space and/or name space, at least one further bit, the significance of the latter is changed.

6. Method according to Claim 5, characterized in that the change takes place in such a manner that the priority during a bus access is primarily due to the priority given by the identifier, irrespective of the length of the identifier.

7. Method according to Claim 5, characterized in that, by means of the changed significance, messages with a short identifier have precedence when a first number of bits of a long identifier, as determined by the length of the short identifier matches the corresponding bits of a short identifier.

8. Method according to Claim 5, characterized in that the at least one changeable bit is sent recessively.

9. Method according to Claim 5, characterized in that the at least one changeable bit is defined uniformly dominant or recessive for all messages.

10. Method according to any of Claims 1-9, characterized in that the IDE field comprises one bit and is set dominant for identifying short identifiers in messages which are compatible with the CAN protocol and is set recessive in messages with long identifiers.

11. Method according to any of Claims 5-10, characterized in that the at least one further bit is set recessive in messages with long identifiers (SRR bit).

## Revendications

1. Procédé de composition de message pour l'échange de données et/ou la synchronisation de processus dans des installations de traitement de données dans lesquelles au moins deux participants sont reliés par un bus série, un message se composant d'au moins un élément de départ (bit de départ, SOF), d'un identificateur de données et d'un élément de fin (EOF),
- l'identificateur fixant à la fois la nature des données à transmettre par le message et la priorité du message,
- la priorité définissant l'accès au bus,
caractérisé en ce que
le message comporte au moins un champ de bits (champ IDE) avec au moins un bit dans lequel se trouve une information pour sélectionner au moins l'une des deux longueurs d'identificateur possibles pour le message à transmettre.

2. Procédé selon la revendication 1,
caractérisé en ce que
le champ IDE pour caractériser la longueur de l'identificateur appartient aux bits qui, en cas d'identificateur court, servent à la décision pour l'attribution du bus.

3. Procédé selon la revendication 1 ou 2,
caractérisé en ce que le champ IDE prend la même position dans tous les messages pour caractériser la longueur de l'identificateur.

4. Procédé selon l'une des revendications 1 à 3,
caractérisé en ce que
le champ IDE pour caractériser la longueur de l'identificateur utilise au moins l'un des bits réservés du message CAN.

5. Procédé selon la revendication 1,
caractérisé en ce que
si la combinaison de bits ou la décision de l'attribution de bus contient, en plus du bit d'identification englobant l'espace de priorité et/ou de nom, au moins un autre bit dont la valeur peut être modifiée.

6. Procédé selon la revendication 5,
caractérisé en ce que
la variation est telle que la priorité pour l'accès au bus est indépendante de la longueur de l'identificateur et se fait principalement par la priorité attribuée à l'identificateur.

7. Procédé selon la revendication 5,
caractérisé en ce que
les messages à identificateur court ont la priorité en cas de valeur modifiée et de concordance entre un premier nombre de bits d'un identificateur long défini par la longueur de l'identificateur court, et les bits correspondant d'un message à identificateur court.

8. Procédé selon la revendication 5,
caractérisé en ce qu'
on émet au moins un autre bit de manière récessive.

9. Procédé selon la revendication 5,
caractérisé en ce qu'
on fixe au moins un bit modifié pour tous les messages, de manière unitaire, dominante ou récessive.

10. Procédé selon au moins l'une des revendications 1 à 9,
caractérisé en ce que
le champ IDE comprend un bit et est fixé de manière dominante pour caractériser un identificateur court dans les messages, compatible avec le protocole CAN, et on le met de manière récessive dans les messages à identificateur long.

11. Procédé selon au moins l'une des revendications 5 à 10,
caractérisé en ce qu'
on a au moins un autre bit dans les messages à identificateur long, qui est mis récessif (bit SRR).
